# EUROPEAN PATENT SPECIFICATION

(11) **EP 3 232 792 B1**
(45) Date of publication and mention of the grant of the patent: **29.01.2020**
(21) Application number: 15869427.3
(22) Date of filing: 04.11.2015
(51) Int. Cl.: A21D 6/00, A21D 13/00, A47J 43/20, A21C 3/06

(54) **ROLLER SYSTEM FOR LAMINATED PRODUCTS**
ROLLENSYSTEM FÜR LAMIMATPRODUKTE
SYSTÈME DE ROULEAU POUR PRODUITS STRATIFIÉS

(30) Priority: 19.12.2014 MX 2014016071
(43) Date of publication of application: 25.10.2017
(73) Proprietor: Heat and Control, Inc., Hayward, California 94545 (US)
(72) Inventor: CARIDIS, Andrew Anthony, San Carlos, California 94070 (US); ZARATE ANDRADE, Leopoldo, 45655 Jalisco, Tlajomulco de Zuñiga (MX); GONZALEZ GRANADOS, Sergio, 45588 Jalisco, Tlaquepaque (MX); GOMEZ ANGULO, Miguel Angel, 45150 Jalisco, Zapopan (MX); LORENZANA SAUCEDO, Mario, 45602 Jalisco, Tlaquepaque (MX)
(74) Representative: Lambacher, Michael
(86) International application number: PCT/IB2015/058531
(87) International publication number: WO 2016/097894

(56) References cited:
- EP-A1- 0 084 509
- EP-A1- 0 962 141
- WO-A1-2005/065462
- DE-A1- 2 603 169
- DE-A1- 2 909 296
- FR-A1- 2 692 757
- JP-A- S58 205 455
- MX-A- NL04 000 037
- US-A- 3 290 859
- US-A- 3 704 664
- US-A- 4 116 120
- US-A1- 2006 107 846
- US-A1- 2012 308 693
- US-B1- 6 659 755

## Description

### Object of the Invention

The present invention refers to a roller system for laminated products which present different shapes of any type of mass and/or a combination of them, with the end goal of obtaining different rolled tri-dimensional shapes, to be baked and/or later fried.

### Background

The rolling methods which exist in the industry, only allow rolling the laminated shape, without having the possibility of obtaining an open rolling or of being able to control the rolling degree of the laminated shape, so that this always remains closed and cannot generate different shapes with the same feeding directions and laminated shape. These types of methods are very limited in so far as the laminated shapes which can be developed, given that the rolling is carried out through belt sections placed in a vertical manner, and which rest over a horizontal belt which is what actually feeds the laminated shapes towards the oven.

The patent application DE 2909296 A1 discloses a machine for forming roll cakes of biscuit-thin which works thorn free and in which the rolled pastry piece is subjected to lower mechanical stresses. The machine provided solves the large residence time of the rolled biscuit and the low yields obtained when a mandrel for wrapping the dough is used. The machine comprises a conveyor which moves horizontally, two groups of intersecting endless belts which enclose with the conveyor and, a winding space where the biscuit is wrapped. The invention teaches one way to wrap the dough without mandrel by means of a winding device which is comprised by a conveyor belt and two belt groups which revolve a common driven guide roller and each a small guide roller; the ribbons of the belt groups cross one another to form a roughly triangular winding space. It is an essential feature of this invention that the opening of the winding space be time controlled.

The granted patent US 6,659,755 discloses a dough shaping machine which comprises a frame, a station for rolling out dough, a station for rolling up the rolled out dough, a station for shaping the rolled up dough and at least one conveyor for transferring the dough to each station. The dough shaping machine solves the long time that it takes to demount a conveyor or conveyors in that it necessitates demounting a part of the frame so that all components of this machine form a unitary assembly structurally separate from the main frame and mounted thereon by removable fixing means. Each conveyor is motorized and includes a metallic framework, two drive rollers and supporting a dough transfer belt. The machine shows two paths, an outward path where the rolling out and the rolling up of the dough happens and, a return path where the stretching of the rolled up dough is performed. These paths are delimited by the active faces of the conveyors. The machine of the granted patent uses a fixed belt and one of the active faces of the conveyors to roll up the rolled out dough in the conventional way.

The patent application DT 2603169 A1 is related to a dough wrapping machine which it installed in order to eliminate the risk of accidents during manual loading. This dough wrapping machine according to the invention consists of a winding unit, a feed device and a discharge device. The winding unit consists of two driven rollers and two winding rollers arranged directly adjacent to these; the discharge device comprises two superimposed oppositely circulating belts which are parallel to each other and are guided over corresponding guide rollers. These opposite strands are spaced apart a little less than the thickness of the dough pieces and an essential part of the invention is the feed device which is in front of the winding unit and is formed by two superimposed rotating bands which are guided over guide rollers.

The Japanese patent application 57087529 discloses an automatic rolling apparatus which comprises a horizontal transferring track for transferring a material to be rolled, a rising track for raising the material to be rolled upward at the tip of the horizontal transferring track and a rolling and pressing roller. The rolling of a sponge cake in the present invention is mechanically by mean of the rolling and pressing roller which rotates in an opposite direction to the rinsing direction of the material to be rolled. The present invention is different from those which already exist in the state of the art given its flexibility to carry out the rolling of laminated products in different directions, but mainly in the ability to control that which is closed or open or the rolling of the laminate, product to be fed, as well as freeing the rolling at a desired point to allow achieving different rolled shapes with the same laminated figure to be rolled.

### Brief Description of the Invention

The present invention refers to a roller system for laminated products as set forth in independent claim 1. The roller system comprises a horizontal conveyor belt, set on an upper part of a main support structure, which receives laminated products and conveys them in a first direction at a first velocity towards a start roller belt; said start roller belt which is perpendicular to the horizontal conveyor, belt, is set over a second mobile support structure, to begin the rolling of the laminated products at a second velocity and in a second direction, said start roller belt transports the laminated products with the rolling having started towards a rolling belt. The second mobile support structure is supported on a longitudinal guide rail set over the main support structure to longitudinally move the start roller belt in relation to the conveyor belt, in such a way that said start roller belt is able to approach/distance itself from the conveyor belt; the rolling belt is located on an inclined plane under the horizontal conveyor belt, and mounted on a third mobile support structure, wherein the third mobile support structure is mounted on a vertical guide rail, said vertical guide rail is mounted on the second mobile support structure, in such a way that said rolling belt moves vertically in relation to the start roller belt; wherein the movement is undertaken by means of a third servomotor and wherein the third mobile support structure is found connected to the second support structure, in such a way that said rolling belt has two movements, a vertical movement and a longitudinal movement. The rolling belt is configured to roll the laminated products and to convey them towards an unloading belt at a third velocity and in a third direction; said horizontal unloading belt, set on the lower part of the main support structure and configured to unload the rolled products.

### Brief Description of Figures

The illustrative embodiment may be described referencing the accompanying figures, which refer to:
Figure 1 shows an isometric view of the roller system for laminated products of the present invention.
Figure 2 shows a longitudinal cut of the roller system for laminated products of the present invention.
Figure 3 shows detail of the guiding rails for the start roller belt and for the rolling belt of the roller system for laminated products of the present invention.
Figure 4 shows the transference of laminated products from the horizontal conveyor belt towards the start roller belt.
Figure 5 shows the rolling of the laminated products undertaken from the start roller belt and the rolling belt.
Figure 6 displays the unloading of the rolled products from the rolling belt towards the unloading belt.

### DETAILED DESCRIPTION OF THE INVENTION

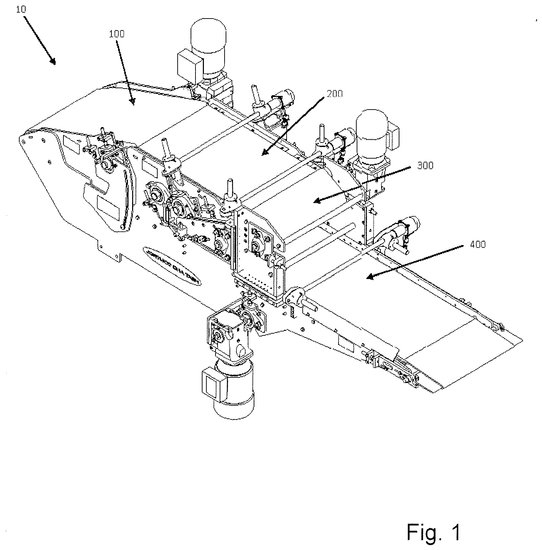

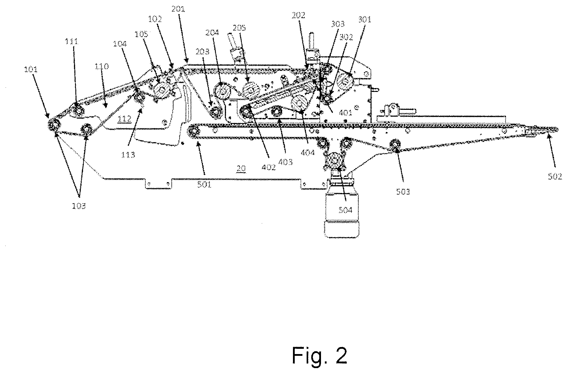

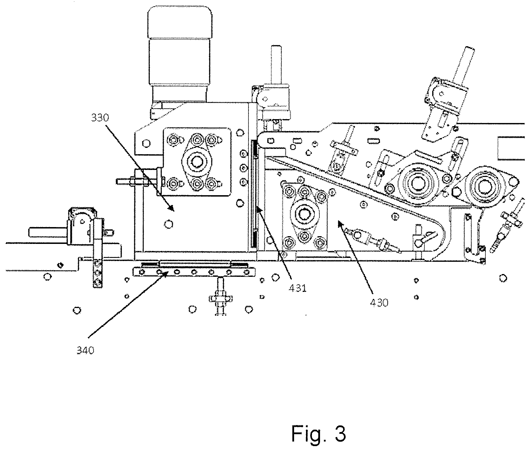

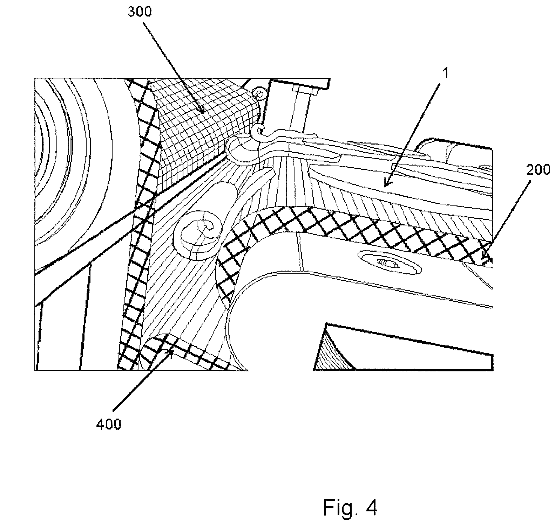

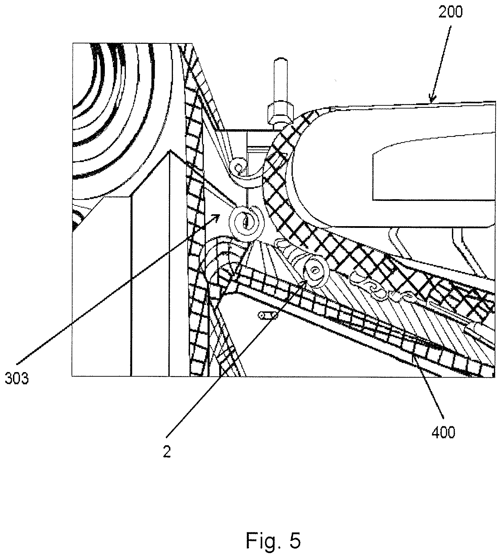

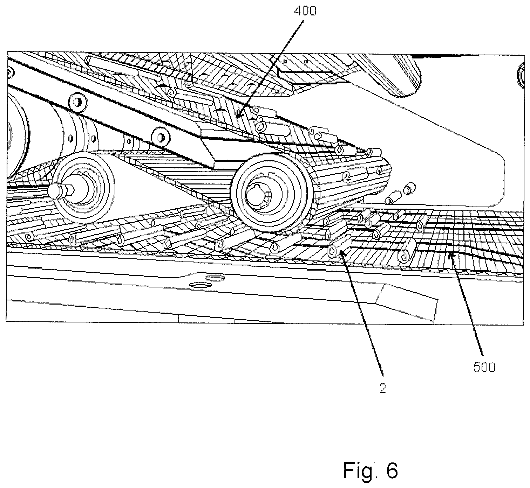

The following description is made referencing figures 1 through 6 indistinctively.

The present invention refers to a roller system (10) for laminated products (1) based on any type of mass and/or combination thereof. Said roller system (10) is found set over a main support structure (20).

The roller system (10) presents a feeding belt (100), which itself presents an entrance end (101) and an exit end (102), said feeding belt (100) is found partially mounted unto a first mobile support structure (110), the feeding belt (100) presents a tilting movement at the exit end (102), in such a way that the first mobile support structure (110) presents a pivot (111) near the entrance end (101) of the feeding belt (100), in such a way that the first mobile support structure (110) moves in accordance to the main support structure (20), said feeding belt (100) presents a plurality of tracking rollers (103), a tension roller (104) and a driver roller (105), the tension roller (104) and the driver roller (105) are found set on the first mobile support structure (110), while the tracking rollers (103) are distributed between the first mobile support structure (110) and the main support structure (20); said tension roller (104) is displaced vertically within a groove set (113) on a lateral wall (112) of the first mobile support structure (110).

The exit end (102) of the feeding belt (100) is found in communication with an entrance end (201) of a horizontal conveyor belt (200) preferably mounted on a horizontal plane on the upper end of the main support structure (20), said horizontal conveyor belt (200) presents an exit end (202) opposite to the entrance end (201), a plurality of tracking rollers (203), a tension roller (204) and a driver roller (205), the tension roller (204) is displaced angularly to be able to tense the horizontal conveyor belt (200) and ensure its proper functioning in this way, said displacement is carried out preferably by means of a first servomotor.

The exit end (202) of the horizontal conveyor belt (200) is found in communication with the working surface (303) of a start roller belt (300) set on a vertical plane, in such a way that it is found perpendicular to the horizontal conveyor belt (200), said start roller belt (300) comprises a driver roller (301) and at least two tracking rollers (302); said start roller belt (300) has the ability to displace itself at a velocity and/or in a direction different from those of the horizontal conveyor belt (200), the above in order to achieve different types of rolling on the laminated products (1), said start roller belt (300) is found mounted on a second mobile support structure (330), said second mobile support structure (330) is found supported on a longitudinal guide rail (340) set over the main support structure (20) to longitudinally move the start roller belt (300) in relation to the horizontal conveyor belt (200), in such a way that said start roller belt is able to approach/distance itself from the horizontal conveyor belt (200), this adjustment allows achieving the desired aperture on the rolling product (2), this adjustment is crucial to achieve the rolling of the product, and it is undertaken, preferably by means of a second servomotor.

A rolling belt (400) set on an inclined plane which presents an entrance end (401) and an exit end (402), the rolling belt (400) comprises a plurality of tracking rollers (403), a tension - driver roller (404); the entrance end (401) is found at a higher point in relation to the exit end (402), similarly, said entrance end (401) is found below the exit end (202) of the horizontal conveyor belt (200) and in close proximity to the working surface (303) of the start roller belt (300); said rolling belt (400) is found mounted over a third mobile support structure (430) which is found mounted over a vertical guide rail (431), said vertical rail guide (431) is found mounted over the second mobile support structure (330), in such a way that said rolling belt (400) moves vertically in relation to the start roller belt (300), this adjustment allows approaching or distancing the rolling belt to the return of the unloading belt (500). This adjustment allows ensuring and maintaining the desired aperture on the rolling product (2) and is carried out preferably by means of a third servomotor.

Given that the third and second mobile support structures (430, 330) are found connected, upon approaching/distancing the start roller belt (300) of the horizontal conveyor belt (200), consequently the rolling belt (400) also approaches/distances itself longitudinally from/to second mobile support structure (330) of said horizontal conveyor belt (200), so that said rolling belt (400) has two movements, a vertical movement and a longitudinal movement.

An unloading belt (500) which receives the laminated product (1) once it has been rolled from the rolling belt (400), which additionally feeds the rolled product (2) to the next step of the process, whether it is to be baked or fried. Said belt comprises an entrance end (501), an exit end (502), a plurality of tracking rollers (503) and a tensioning-driving roller (504), said unloading belt is found mounted on the main support structure (20).

Alterations to the structure described in the present would be able to be foreseen by those persons skilled in the art. However, it must be understood that the present description is related with the preferred embodiments of the invention, which is merely for illustrative purposes only, and must not be understood as a limitation of the invention.

## Claims

1. A roller system (10) for laminated products (1) comprising a horizontal conveyor belt (200), set on an upper part of a main support structure (20), which receives laminated products (1) and conveys them in a first direction at a first velocity towards a start roller belt (300);
wherein said start roller belt (300), which is perpendicular to the horizontal conveyor belt (200), is set over a second mobile support structure (330), to begin the rolling of the laminated products (1) at a second velocity and in a second direction, wherein said start roller belt (300) transports the laminated products (1) with the rolling having started towards a rolling belt (400);
**characterized in that** the second mobile support structure (330) is supported on a longitudinal guide rail (340) set over the main support structure (20) to longitudinally move the start roller belt (300) in relation to the conveyor belt (200), in such a way that said start roller belt (300) is able to approach/ distance itself from the conveyor belt (200);
**in that** the rolling belt (400) is located on an inclined plane under the horizontal conveyor belt (200) and mounted on a third mobile support structure (430), wherein the third mobile support structure (430) is mounted on a vertical guide rail (431), said vertical guide rail (431) is mounted on the second mobile support structure (330), in such a way that said rolling belt (400) moves vertically in relation to the start roller belt (300); wherein the movement is undertaken by means of a third servomotor and wherein the third mobile support structure (430) is found connected to the second support structure (330), in such a way that said rolling belt (400) has two movements, a vertical movement and a longitudinal movement;
and **in that** the rolling belt (400) is configured to roll the laminated products (1) and to convey them towards an unloading belt (500) at a third velocity and in a third direction; said horizontal unloading belt (500) being set on the lower part of the main support structure (20) and configured to unload the rolled products (1).

2. The roller system (10) for laminated products (1) according to claim 1, wherein prior to the conveyor belt (200) a feeding belt (100) is found set to receive laminated products (1) and operable for transporting said pieces towards the conveyor belt (200) and wherein the main mobile support structure presents a pivot (111) near the entrance end (101) of the feeding belt (100), in such a way that the first support structure presents a tilting movement in accordance to the main support structure (20).

3. The roller system (10) for laminated products (1) according to claim 2, wherein the feeding belt (100) presents an entrance end (101), an exit end, a plurality of tracking rollers (103), a tension roller and a driver roller; wherein the tension roller and the driver roller are found set on a first mobile support structure, while the tracking rollers (103) are distributed between the first support structure and the main support structure (20).

4. The roller system (10) for laminated products (1) according to claim 3, wherein said tension roller is vertically displaced in a groove set on a lateral wall of the first mobile support structure.

5. The roller system (10) for laminated products (1) according to claim 1, wherein said conveyor belt (200) presents an exit end (202) opposite to an entrance end (201), a plurality of tracking rollers (203), one tension roller (204) and one driver roller (205); wherein the tension roller (204) is angularly displaced to tense the conveyor belt (200) and wherein said displacement is carried out by means of a first servomotor.

6. The roller system (10) for laminated products (1) according to claim 1, wherein said start roller belt (300) comprises a driver roller (301) and at least two tracking rollers (302).

7. The roller system (10) for laminated products (1) according to claim 1, wherein the second velocity and the second direction of said start roller belt (300) are different from the first velocity and first direction of the conveyor belt (200).

8. The roller system (10) for laminated products (1) according to claim 1, wherein the second velocity and the second direction of said start roller belt (300) are equal to the first velocity and first direction of the conveyor belt (200).

9. The roller system (10) for laminated products (1) according to claim 1, wherein the second velocity of said start roller belt (300) is different from the first velocity of the conveyor belt (200).

10. The roller system (10) for laminated products (1) according to claim 1, wherein the second direction of said start roller band is different from the first direction of the conveyor belt (200).

11. The roller system (10) for laminated products (1) according to claim 1, wherein the movement is undertaken by means of a second servomotor.

12. The roller system (10) for laminated products (1) according to claim 1, wherein the roller belt (400) presents an entrance end (401), an exit end (402), a plurality of tracking rollers (403), a tension roller and a driver roller (404); wherein the entrance end (401) is found at a higher point in relation to the exit end (402), similarly, said entrance end (401) is found below the exit end (202) of the conveyor belt (200) and in close proximity to the working surface (303) of the start roller belt (300).

13. The roller system (10) for laminated products (1) according to claim 1, wherein said unloading belt (500) comprises an exit end (502), an entrance end (501), a plurality of tracking rollers (503), a tension roller and a driver roller (504).

## Patentansprüche

1. Rollensystem (10) für tourierte Produkte (1), umfassend ein horizontales Förderband (200), das auf einem oberen Teil einer Haupttragstruktur (20) angeordnet ist, das tourierte Produkte (1) aufnimmt und sie in einer ersten Richtung mit einer ersten Geschwindigkeit zu einem Startrollenband (300) befördert;
wobei das Startrollenband (300), das senkrecht zum horizontalen Förderband (200) ist, über eine zweite bewegliche Tragstruktur (330) gelegt ist, um das Rollen der tourierten Produkte (1) mit einer zweiten Geschwindigkeit und in einer zweiten Richtung zu beginnen, wobei das Startrollenband (300) die tourierten Produkte (1), wenn das Rollen angefangen hat, zu einem Rollband (400) transportiert;
**dadurch gekennzeichnet, dass** die zweite bewegliche Tragstruktur (330) auf einer Längsführungsschiene (340) gelagert ist, die über die Haupttragstruktur (20) gelegt ist, um das Startrollenband (300) in Bezug auf das Förderband (200) derart in Längsrichtung zu bewegen, dass das Startrollenband (300) in der Lage ist, sich dem Förderband (200) zu nähern/sich von ihm zu entfernen;
dass das Rollband (400) auf einer geneigten Ebene unter dem horizontalen Förderband (200) angeordnet ist und auf einer dritten beweglichen Tragstruktur (430) montiert ist, wobei die dritte bewegliche Tragstruktur (430) auf einer vertikalen Führungsschiene (431) angebracht ist, wobei die vertikale Führungsschiene (431) derart auf der zweiten beweglichen Tragstruktur (330) montiert ist, dass sich das Rollband (400) vertikal zum Startrollenband (300) bewegt; wobei die Bewegung mittels eines dritten Servomotors erfolgt, und wobei die dritte bewegliche Tragstruktur (430) mit der zweiten Tragstruktur (330) derart verbunden ist, dass das Rollband (400) zwei Bewegungen hat, eine Vertikalbewegung und eine Längsbewegung; und dass das Rollband (400) dazu konfiguriert ist, die tourierten Produkte (1) zu rollen und sie mit einer dritten Geschwindigkeit und in eine dritte Richtung einem Entladeband (500) zuzuführen; wobei das horizontale Entladeband (500) auf dem unteren Teil der Haupttragstruktur (20) liegt und dazu konfiguriert ist, die gerollten Produkte (1) zu entladen.

2. Rollensystem (10) für tourierte Produkte (1) nach Anspruch 1, wobei sich vor dem Förderband (200) ein Zuführband (100) befindet, um tourierte Produkte (1) aufzunehmen und das betätigbar ist, um die Stücke zum Förderband (200) zu transportieren, und wobei die bewegliche Haupttragstruktur einen Drehzapfen (111) in der Nähe des Eintrittsendes (101) des Zuführbands (100) aufweist, so dass die erste Tragstruktur eine Schwenkbewegung in Übereinstimmung mit der Haupttragstruktur (20) durchführt.

3. Rollensystem (10) für tourierte Produkte (1) nach Anspruch 2, wobei das Zuführband (100) ein Eintrittsende (101), ein Austrittsende, eine Vielzahl von Nachführrollen (103), eine Spannrolle und eine Antriebsrolle aufweist; wobei die Spannrolle und die Antriebsrolle auf einer ersten beweglichen Tragstruktur liegen, während die Nachführrollen (103) zwischen der ersten Tragstruktur und der Haupttragstruktur (20) verteilt sind.

4. Rollensystem (10) für tourierte Produkte (1) nach Anspruch 3, wobei die Spannrolle vertikal in einer Nut verschoben ist, die an einer Seitenwand der ersten beweglichen Tragstruktur angeordnet ist.

5. Rollensystem (10) für tourierte Produkte (1) nach Anspruch 1, wobei das Förderband (200) ein Austrittsende (202) gegenüber von einem Eintrittsende (201), eine Vielzahl von Nachführrollen (203), eine Spannrolle (204) und eine Antriebsrolle (205) aufweist; wobei die Spannrolle (204) winklig verschoben ist, um das Förderband (200) zu spannen, und wobei die Verschiebung mittels eines ersten Servomotors ausgeführt wird.

6. Rollensystem (10) für tourierte Produkte (1) nach Anspruch 1, wobei das Startrollenband (300) eine Antriebsrolle (301) und wenigstens zwei Nachführrollen (302) umfasst.

7. Rollensystem (10) für tourierte Produkte (1) nach Anspruch 1, wobei sich die zweite Geschwindigkeit und die zweite Richtung des Startrollenbandes (300) von der ersten Geschwindigkeit und der ersten Richtung des Förderbandes (200) unterscheiden.

8. Rollensystem (10) für tourierte Produkte (1) nach Anspruch 1, wobei die zweite Geschwindigkeit und die zweite Richtung des Startrollenbandes (300) gleich der ersten Geschwindigkeit und der ersten Richtung des Förderbandes (200) sind.

9. Rollensystem (10) für tourierte Produkte (1) nach Anspruch 1, wobei sich die zweite Geschwindigkeit des Startrollenbandes (300) von der ersten Geschwindigkeit des Förderbandes (200) unterscheidet.

10. Rollensystem (10) für tourierte Produkte (1) nach Anspruch 1, wobei sich die zweite Richtung des Startrollenbandes von der ersten Richtung des Förderbandes (200) unterscheidet.

11. Rollensystem (10) für tourierte Produkte (1) nach Anspruch 1, wobei die Bewegung mittels eines zweiten Servomotors erfolgt.

12. Rollensystem (10) für tourierte Produkte (1) nach Anspruch 1, wobei das Rollband (400) ein Eintrittsende (401), ein Austrittsende (402), eine Vielzahl von Nachführrollen (403), eine Spannrolle und eine Antriebsrolle (404) aufweist; wobei sich das Eintrittsende (401) an einem höheren Punkt bezogen auf das Austrittsende (402) befindet, und sich das Eintrittsende (401) gleichermaßen unter dem Austrittsende (202) des Förderbands (200) und in unmittelbarer Nähe zur Arbeitsoberfläche (303) des Startrollenband (300) befindet.

13. Rollensystem (10) für tourierte Produkte (1) nach Anspruch 1, wobei das Entladeband (500) ein Austrittsende (502), ein Eintrittsende (501), eine Vielzahl von Nachführrollen (503), eine Spannrolle und eine Antriebsrolle (504) aufweist.

## Revendications

1. Système de rouleau (10) pour produits stratifiés (1) comprenant une courroie d'acheminement horizontale (200), fixée sur une partie supérieure d'une structure de support principale (20), laquelle reçoit des produits stratifiés (1) et les achemine dans une première direction à une première vitesse vers une courroie à rouleaux de départ (300) ;
dans lequel ladite courroie à rouleaux de départ (300), laquelle est perpendiculaire à la courroie d'acheminement horizontale (200), est fixée sur une deuxième structure de support mobile (330), afin de commencer le laminage des produits stratifiés (1) à une deuxième vitesse et dans une deuxième direction, dans lequel ladite courroie à rouleaux de départ (300) transporte les produits stratifiés (1), le laminage ayant débuté vers une courroie roulante (400) ;
**caractérisé en ce que** la deuxième structure de support mobile (330) est soutenue par un rail de guidage longitudinal (340) fixé sur la structure de support principale (20) afin de mouvoir longitudinalement la courroie à rouleaux de départ (300) par rapport à la courroie d'acheminement (200), de telle manière que ladite courroie à rouleaux de départ (300) soit capable de s'approcher/se distancier de la courroie d'acheminement (200) ;
**en ce que** la courroie roulante (400) est située sur un plan incliné sous la courroie d'acheminement horizontale (200) et montée sur une troisième structure de support mobile (430), dans lequel la troisième structure de support mobile (430) est montée sur un rail de guidage vertical (431), ledit rail de guidage vertical (431) est monté sur la deuxième structure de support mobile (330), de telle manière que ladite courroie roulante (400) se meuve verticalement par rapport à la courroie à rouleaux de départ (300) ; dans lequel le mouvement est entrepris au moyen d'un troisième servomoteur et dans lequel la troisième structure de support mobile (430) est raccordée à la deuxième structure de support (330), de telle manière que ladite courroie roulante (400) présente deux mouvements, un mouvement vertical et un mouvement longitudinal ;
et **en ce que** la courroie roulante (400) est configurée pour laminer les produits stratifiés (1) et pour les acheminer vers une courroie de déchargement (500) à une troisième vitesse et dans une troisième direction ; ladite courroie de déchargement horizontale (500) étant fixée sur la partie inférieure de la structure de support principale (20) et configurée pour décharger les produits laminés (1).

2. Système de rouleau (10) pour produits stratifiés (1) selon la revendication 1, dans lequel, préalablement à la courroie d'acheminement (200), une courroie d'alimentation (100) est fixée pour recevoir des produits stratifiés (1) et permet de transporter lesdites pièces vers la courroie d'acheminement (200) et dans lequel la structure de support mobile principale présente un pivot (111) près de l'extrémité d'entrée (101) de la courroie d'alimentation (100), de telle manière que la première structure de support présente un mouvement de basculement conformément à la structure de support principale (20).

3. Système de rouleau (10) pour produits stratifiés (1) selon la revendication 2, dans lequel la courroie d'alimentation (100) présente une extrémité d'entrée (101), une extrémité de sortie, une pluralité de rouleaux de suivi (103), un rouleau de tension et un rouleau d'entraînement ; dans lequel le rouleau de tension et le rouleau d'entraînement sont fixés sur une première structure de support mobile, tandis que les rouleaux de suivi (103) sont distribués entre la première structure de support et la structure de support principale (20).

4. Système de rouleau (10) pour produits stratifiés (1) selon la revendication 3, dans lequel ledit rouleau de tension est déplacé verticalement dans une rainure fixée sur une paroi latérale de la première structure de support mobile.

5. Système de rouleau (10) pour produits stratifiés (1) selon la revendication 1, dans lequel ladite courroie d'acheminement (200) présente une extrémité de sortie (202) opposée à une extrémité d'entrée (201), une pluralité de rouleaux de suivi (203), un rouleau de tension (204) et un rouleau d'entraînement (205) ; dans lequel le rouleau de tension (204) est déplacé angulairement afin de tendre la courroie d'acheminement (200) et dans lequel ledit déplacement est effectué au moyen d'un premier servomoteur.

6. Système de rouleau (10) pour produits stratifiés (1) selon la revendication 1, dans lequel ladite courroie à rouleaux de départ (300) comprend un rouleau d'entraînement (301) et au moins deux rouleaux de suivi (302).

7. Système de rouleau (10) pour produits stratifiés (1) selon la revendication 1, dans lequel la deuxième vitesse et la deuxième direction de ladite courroie à rouleaux de départ (300) sont différentes de la première vitesse et de la première direction de la courroie d'acheminement (200).

8. Système de rouleau (10) pour produits stratifiés (1) selon la revendication 1, dans lequel la deuxième vitesse et la deuxième direction de ladite courroie à rouleaux de départ (300) sont égales à la première vitesse et à la première direction de la courroie d'acheminement (200).

9. Système de rouleau (10) pour produits stratifiés (1) selon la revendication 1, dans lequel la deuxième vitesse de ladite courroie à rouleaux de départ (300) est différente de la première vitesse de la courroie d'acheminement (200).

10. Système de rouleau (10) pour produits stratifiés (1) selon la revendication 1, dans lequel la deuxième direction de ladite bande à rouleaux de départ est différente de la première direction de la courroie d'acheminement (200).

11. Système de rouleau (10) pour produits stratifiés (1) selon la revendication 1, dans lequel le mouvement est entrepris au moyen d'un deuxième servomoteur.

12. Système de rouleau (10) pour produits stratifiés (1) selon la revendication 1, dans lequel la courroie à rouleaux (400) présente une extrémité d'entrée (401), une extrémité de sortie (402), une pluralité de rouleaux de suivi (403), un rouleau de tension et un rouleau d'entraînement (404) ; dans lequel l'extrémité d'entrée (401) se trouve au niveau d'un point plus élevé par rapport à l'extrémité de sortie (402), similairement, ladite extrémité d'entrée (401) se trouve au-dessous de l'extrémité de sortie (202) de la courroie d'acheminement (200) et à proximité immédiate de la surface de travail (303) de la courroie à rouleaux de départ (300).

13. Système de rouleau (10) pour produits stratifiés (1) selon la revendication 1, dans lequel ladite courroie de déchargement (500) comprend une extrémité de sortie (502), une extrémité d'entrée (501), une pluralité de rouleaux de suivi (503), un rouleau de tension et un rouleau d'entraînement (504).
